# NOUVEAU FASCICULE DE BREVET EUROPEEN

(11) **EP 3 815 838 B2**
(45) Date de publication et mention de la décision concernant l'opposition: **15.04.2026**
(45) Mention de la délivrance du brevet: 28.06.2023
(21) Numéro de dépôt: 20205793.1
(22) Date de dépôt: 04.11.2020
(51) Int. Cl.: B23K 26/362, B23K 26/402

(54) **PROCÉDÉ DE FABRICATION D'UNE PIÈCE DE VÉHICULE TRANSPARENTE**
VERFAHREN ZUR HERSTELLUNG EINES TRANSPARENTEN FAHRZEUGSTEILS
METHOD FOR PRODUCING A TRANSPARENT PART FOR A VEHICLE

(30) Priorité: 04.11.2019 FR 1912347
(43) Date de publication de la demande: 05.05.2021
(73) Titulaire: OPmobility SE, 69007 Lyon (FR)
(72) Inventeur: GUILLIER, Stéphane, 01150 SAINTE-JULIE (FR); VIDAL, Sophie, 01150 SAINTE-JULIE (FR)
(74) Mandataire: LLR

(56) Documents cités:
- EP-A1- 2 793 062
- EP-A1- 3 208 526
- EP-A1- 3 530 476
- WO-A1-2018/130536
- DE-A1- 4 109 532
- US-A1- 2015 370 374
- US-A1- 2019 221 553

## Description

L'invention concerne un procédé de fabrication d'une pièce de véhicule transparente et contribuant à l'aspect extérieur du véhicule.

Un véhicule comprend plusieurs pièces transparentes destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumières prévues à des fins décoratives qui améliorent l'esthétique du véhicule.

A ces fins, il est possible de traiter une surface des pièces transparentes afin d'améliorer leur aspect. Une possibilité pour ce faire consiste à surmouler un film sur la surface de la pièce transparente, le film présentant un motif opaque prédéfini. De la sorte, lorsque la source de lumière associée à la pièce transparente émet de la lumière, cette dernière est partiellement bloquée par l'opacité du motif et transmise par les parties de la pièce qui ne sont pas recouvertes par le motif. Cela permet d'améliorer l'esthétique du faisceau lumineux transmis, par la pièce transparente, de la source de lumière vers l'environnement extérieur. Une autre possibilité consiste à décorer la pièce transparente par peinture et marouflage, ce qui permet d'obtenir un résultat similaire. Par ailleurs, le document EP 3 208 526 A1 divulgue un procédé selon le préambule de la revendication 1.

Ces options sont intéressantes mais peuvent poser problème. En effet, un film tel que décrit ci-dessus peut poser des problèmes de correspondance de couleur avec la peinture du véhicule, ce qui a un impact négatif sur l'esthétique du véhicule. De plus, l'application du film selon l'une des manières présentées ci-dessus peut ne pas permettre d'obtenir un motif d'une précision aussi élevée que souhaitée. De plus, un tel film peut poser des problèmes de vieillissement.

L'invention a notamment pour but de remédier à ce problème en proposant un procédé posant moins de problème de correspondance de couleur avec la peinture du véhicule et qui soit plus précis que celui de l'art antérieur.

A cet effet, on prévoit selon l'invention un procédé de fabrication d'une pièce de véhicule selon la revendication 1.

On peut ainsi appliquer la peinture sur une face de la pièce transparente puis la retirer par gravure à l'aide du rayonnement laser selon un motif prédéfini choisi. On comprend que le laser permet de retirer la peinture afin d'obtenir un rendu plus précis qu'en mettant en oeuvre l'un des procédés de l'art antérieur. De plus, le fait que la couleur du revêtement soit donnée par de la peinture et non par un film comme dans l'art antérieur permet de choisir une peinture qui corresponde à celle utilisée pour la carrosserie du véhicule. Il s'ensuit que moins de problèmes de correspondance de couleur se posent.

Une couche de primaire opacifiant permet d'opacifier la couche de peinture et ainsi d'améliorer son aspect. Il s'agit d'une utilisation relativement inhabituelle, puisqu'une telle couche est généralement placée entre la pièce revêtue, ici la pièce transparente, et la couche de base afin d'améliorer l'adhérence de la couche de base à la pièce. Sans la couche de primaire opacifiant, il serait nécessaire d'augmenter l'épaisseur de la couche de peinture pour obtenir un rendu similaire avec le bon niveau d'opacité, ce qu'il est préférable d'éviter pour des raisons de coûts et d'adhérence de la couche de peinture à la pièce transparente. De plus, une couche de peinture plus épaisse serait plus difficile à graver avec le rayonnement laser, ce qui pourrait ralentir le procédé de fabrication de la pièce de véhicule. Par ailleurs, une couche de peinture plus épaisse pourrait rendre le motif lumineux flou à cause de phénomènes de diffusion lumineuse à travers cette couche de peinture ayant pour conséquence un effet de halo et pourrait donc avoir un effet négatif sur l'esthétique du faisceau lumineux.

A la place du primaire opacifiant, on utilise une laque opaque, par exemple à base de résines thermodurcissables, notamment alkydes ou glycérophtaliques, ou à base de polyuréthanes. La laque ne sert pas pour ses caractéristiques d'aspect intrinsèques. Tout comme pour le primaire opacifiant décrit ci-dessus, la laque opaque permet d'opacifier la couche de peinture et ainsi d'améliorer son aspect, et permet d'éviter d'avoir à augmenter l'épaisseur de la couche de peinture pour obtenir un rendu similaire avec le bon niveau d'opacité. En outre, la laque a l'avantage d'être plus résistante aux chocs et aux frottements. L'utilisation de la laque permet donc de réduire, par rapport à un primaire opacifiant, le risque d'endommagement de la pièce de véhicule lors de son assemblage sur le véhicule.

De préférence, la couche de peinture comportant une couche de base, la couche de peinture est appliquée de sorte que la couche de base soit située entre la première face de la pièce transparente et la couche de primaire opacifiant ou de laque opaque.

Avantageusement, on fabrique la pièce transparente par moulage d'un plastique, par exemple du polycarbonate, du polypropylène, du poly(méthacrylate de méthyle) ou du copolymère oléfinique cyclique.

La pièce transparente est ainsi simple à réaliser et peu onéreuse.

Avantageusement, le rayonnement laser présente une longueur d'onde comprise dans l'infrarouge, de préférence dans l'infrarouge proche.

Un tel rayonnement laser permet d'efficacement éliminer la couche de peinture.

Le procédé comprend en outre une étape d'application d'une couche de vernis sur une seconde face de la pièce transparente, la seconde face étant opposée à la première face.

On protège ainsi la pièce transparente de sollicitations mécaniques qui pourraient la détériorer, par exemple par rayure.

En outre, cette couche de vernis est semblable à celle qu'on applique généralement sur les pièces de carrosserie du véhicule, notamment celles entourant la pièce transparente. De ce fait, on obtient une transition homogène de l'aspect de brillance entre la pièce transparente et les pièces de carrosserie, ce qui contribue à améliorer l'esthétique du véhicule.

De préférence, la couche de vernis est réalisée dans un matériau apte à absorber ou réfléchir des rayonnements ultraviolets.

On protège ainsi la pièce transparente des rayonnements ultraviolets qui pourraient la détériorer par photodégradation.

La couche de vernis est transparente à tout rayonnement laser présentant une longueur d'onde comprise dans l'infrarouge proche.

La couche de vernis peut ainsi laisser passer le rayonnement laser, au cas où il traverserait la pièce transparente, sans qu'il n'y ait de risque qu'elle soit détériorée par le rayonnement laser.

Avantageusement, après l'étape d'irradiation, on lustre la pièce de véhicule.

On améliore ainsi la transparence de la pièce de véhicule en limitant les effets de bord des zones irradiées. Spécifiquement, on atténue la forme en escalier de la couche de peinture, ce qui contribue à rendre plus homogène son aspect de surface. Cela contribue par ailleurs à favoriser la transmission du faisceau lumineux à travers la pièce de véhicule de manière à maximiser son éclairement du fait de l'absence d'effet dit « loupe » que pourraient engendrer les effets de bord.

Le procédé de fabrication permet d'améliorer la qualité générale des pièces de véhicule ainsi produites. Etant donné que la gravure par rayonnement laser est effectuée après l'application de la couche de peinture et de la couche de vernis, aucune poussière générée par la gravure ne peut gêner l'application des couches de peinture et de vernis, ce qui contribue à fluidifier et simplifier la fabrication de la pièce de véhicule.

### Brève description des figures

On va maintenant décrire un mode de réalisation de l'invention à titre d'exemple en se référant aux dessins annexés dans lesquels :
[Fig. 1] la figure 1 est une vue en section d'une première étape de la mise en oeuvre d'un procédé de fabrication selon l'invention, et
[Fig. 2] la figure 2 est une vue en section d'une deuxième étape de la mise en œuvre d'un procédé de fabrication selon l'invention.

### Description détaillée

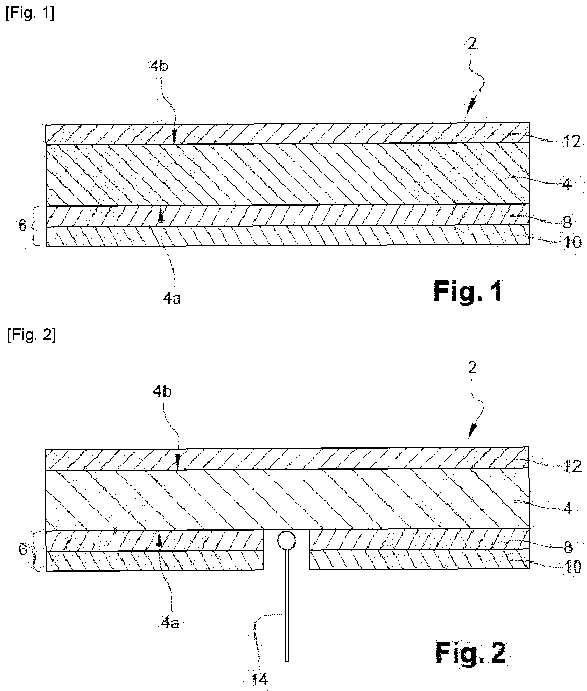

On a représenté sur la figure 1 une première étape d'un procédé de fabrication d'une pièce de véhicule 2.

La pièce de véhicule 2 comprend une pièce transparente 4 destinée à protéger une source de lumière (non représentée). On entend par « transparente » qu'elle est au moins transparente à tout rayonnement lumineux présentant une longueur d'onde comprise dans le spectre visible, c'est-à-dire comprise entre environ 380 et 780 nm. La pièce transparente 4 est ici réalisée dans un plastique présentant cette caractéristique, en l'occurrence du polycarbonate communément désigné « PC ». On peut toutefois prévoir de réaliser la pièce transparente dans un tout autre plastique présentant cette caractéristique, par exemple le polypropylène (PP), le poly(méthacrylate de méthyle) (PMMA) ou le copolymère oléfinique cyclique (COC). La pièce transparente 4 est réalisée par moulage. Un tel procédé étant connu, on ne le détaillera pas davantage dans ce qui suit.

La pièce transparente 4 comprend une face proximale 4a située en regard de la source de lumière et une face distale 4b, opposée à la face proximale 4a, destinée à être orientée du côté de l'environnement extérieur une fois la pièce de véhicule 2 montée dans un véhicule. En d'autres termes, la face distale 4b correspond à la surface externe de la pièce transparente 4.

La pièce de véhicule 2 comprend une couche de peinture 6 qui est déposée sur la face proximale 4a de la pièce transparente 4. Ici, la couche de peinture 6 comporte une couche de base 8 et une couche de primaire opacifiant 10 déposée sur la couche de base 8. En d'autres termes, la couche de base 8 est située entre la face proximale 4a de la pièce transparente 4 et la couche de primaire opacifiant 10. La couche de base 8 permet de colorer l'aspect extérieur de la pièce de véhicule 2. La couche de primaire opacifiant 10 permet d'améliorer l'opacité de la couche de peinture 6. A titre d'exemple de réalisation, la couche de primaire opacifiant 10 peut avoir une épaisseur comprise entre 7 et 12 µm, on comprend ainsi qu'elle n'augmente pas substantiellement l'épaisseur de la couche de peinture 6. Selon une variante de réalisation, la couche de primaire opacifiant est remplacée par une couche de laque opaque qui permet également d'améliorer l'opacité de la couche de peinture 6.

La pièce de véhicule 2 comprend une couche de vernis 12 qui est déposée sur la face distale 4b de la pièce transparente 4. La couche de vernis 12 permet de protéger la pièce transparente 4 de tout rayonnement ultraviolet auquel elle peut être exposée, notamment du soleil. En outre, la couche de vernis 12 permet de protéger mécaniquement la pièce transparente 4, notamment pour éviter qu'elle soit rayée ou déformée par des sollicitations extérieures.

Selon la première étape du procédé de fabrication de la pièce de véhicule 2, on dépose la couche de vernis 12 puis la couche de peinture 6 sur la pièce transparente 4, respectivement sur ses faces distale 4b et proximale 4a.

On a représenté en figure 2 une seconde étape du procédé de fabrication de la pièce de véhicule 2. Dans cette étape, on irradie une partie de la pièce de véhicule 2 à l'aide d'un rayonnement laser 14 de manière à graver la couche de peinture 6. Cette gravure est effectuée dans toute l'épaisseur de la couche de peinture 6. Cette opération est communément désignée par les termes anglo-saxons « laser-etching » pouvant être traduits par « gravure au laser ». Le rayonnement laser 14 présente une longueur d'onde comprise dans l'infrarouge, c'est-à-dire comprise entre 700 nm et 20000 nm dans le cadre de l'invention. Un exemple de tel rayonnement laser est celui communément désigné « laser CO₂ » qui présente une longueur d'onde de 10600 nm. De préférence, la longueur d'onde du rayonnement laser 14 est comprise dans l'infrarouge proche, c'est-à-dire comprise entre 700 et 2000 nm. Dans ce cas et si la couche de vernis 12 est transparente au rayonnement laser 14, ce dernier présente l'avantage de ne pas graver la couche de vernis 12 et donc d'éviter ainsi un risque d'endommagement de celle-ci.

L'irradiation est réalisée uniquement dans une partie de la pièce de véhicule 2 dans le sens où elle est réalisée selon un motif prédéfini couche de peinture 6. Elle est commandée de sorte que la couche de peinture 6 soit irradiée, donc éliminée, dans le motif et dans toute son épaisseur, mais pas la pièce transparente 4. A titre de précaution, la couche de vernis 12 est réalisée dans un matériau transparent au rayonnement laser 14 afin qu'elle ne puisse pas être gravée de manière involontaire dans le cas où le rayonnement laser traverserait la pièce transparente 4.

Après l'irradiation, la face proximale 4a présente deux niveaux.

Dans la zone du motif prédéfini, la face proximale 4a n'est pas revêtue. Dans cette zone, la lumière visible peut être transmise de la source de lumière vers l'environnement extérieur à travers la pièce transparente 4, et inversement.

En dehors de la zone du motif prédéfini, la face proximale 4a est revêtue de la couche de peinture 6, comprenant la couche de base 8 et la couche de primaire opacifiant ou de laque opaque 10. Dans cette zone, la lumière visible ne peut être transmise de la source de lumière vers l'environnement extérieur, et inversement, car elle est absorbée par la couche de peinture 6. Dans la couche de peinture 6, c'est principalement la couche de primaire opacifiant ou de laque opaque 10 qui permet d'absorber la lumière visible, et dans une moindre mesure l'absorption est complétée par la couche de base 8.

Dans la zone du motif prédéfini et en dehors de cette zone, la couche de vernis 12 sur la face distale 4b assure la protection de la pièce transparente 4 aux rayonnements ultraviolets auxquels elle peut être exposée.

Après cette étape d'irradiation, on peut prévoir une étape supplémentaire de lustrage de la face proximale 4a et/ou de la face distale 4b de la pièce transparente 4. Elle permet d'améliorer la transparence dans la zone du motif prédéfini et, de manière plus générale, l'esthétique de la pièce de véhicule 2. En outre, ce lustrage permet d'arrondir les coins formés par la gravure effectuée lors de l'étape d'irradiation, et donc d'atténuer les phénomènes de diffusion lumineuse qui pourraient perturber le faisceau lumineux traversant la pièce de véhicule 2.

L'invention n'est pas limitée aux modes de réalisation présentés et d'autres modes de réalisation apparaîtront clairement à l'homme du métier.

La source de lumière peut faire partie d'un bloc optique de feux de croisement et de route du véhicule, d'un bloc optique de feux clignotant du véhicule, ou bien d'un bloc optique de feux décoratifs.

Alternativement, la pièce transparente peut intégrer des guides de lumière ou des sources de lumière sans bloc optique, par moulage d'insert, surmoulage, fixation par collage, soudure, rivetage ou tout autre moyen de fixation.

Selon une variante de réalisation de l'invention, il est possible d'ajouter une couche de primaire transparent entre la couche de peinture et la pièce transparente. Cette couche de primaire transparent a pour effet d'améliorer l'adhérence de la couche de peinture à la pièce transparente. En outre, elle permet également d'absorber le rayonnement laser pour améliorer l'efficacité de la gravure.

### Liste de références

2 : pièce de véhicule
4 : pièce transparente
4a : face proximale
4b : face distale
6 : couche de peinture
8 : couche de base
10 : couche de primaire opacifiant ou de laque opaque
12 : couche de vernis
14 : rayonnement laser

## Revendications

1. Procédé de fabrication d'une pièce de véhicule (2), comprenant les étapes suivantes, dans l'ordre :
- application d'une couche de vernis (12) sur une face, dite seconde face (4b), d'une pièce transparente (4), la couche de vernis (12) étant transparente à tout rayonnement laser présentant une longueur d'onde comprise dans l'infrarouge proche,
- application d'une couche de peinture (6) sur une face opposée à la seconde face, dite première face (4a), de la pièce transparente (4), et
- irradiation partielle de la couche de peinture (6) avec un rayonnement laser (14) de manière à graver la couche de peinture (6),
**caractérisé en ce que** la couche de peinture (6) comporte une couche de laque opaque (10).

2. Procédé selon la revendication précédente, dans lequel on fabrique la pièce transparente (4) par moulage d'un plastique, par exemple du polycarbonate, du polypropylène, du poly(méthacrylate de méthyle) ou du copolymère oléfinique cyclique.

3. Procédé selon l'une quelconque des revendications précédentes, dans lequel le rayonnement laser (14) présente une longueur d'onde comprise dans l'infrarouge, de préférence dans l'infrarouge proche.

4. Procédé selon l'une quelconque des revendications précédentes, dans lequel la couche de vernis (12) est réalisée dans un matériau apte à absorber ou réfléchir des rayonnements ultraviolets.

5. Procédé selon l'une quelconque des revendications précédentes, dans lequel après l'étape d'irradiation, on lustre la pièce de véhicule (2).

## Patentansprüche

1. Verfahren zur Herstellung eines Fahrzeugteils (2), das die folgenden Schritte aufweist, in der Reihenfolge:
Aufbringen einer Firnisschicht (12) auf eine Seite, die sogenannte zweite Seite (4b), eines transparenten Teils (4), wobei die Firnisschicht (12) für jegliche Laserstrahlung mit einer Wellenlänge im nahen Infrarotbereich transparent ist,
- Aufbringen einer Farbschicht (6) auf einer der zweiten Seite gegenüberliegenden Seite, die sogenannte erste Seite (4a), des transparenten Teils (4), und
- teilweise Bestrahlen der Farbschicht (6) mit Laserstrahlung (14), um die Farbschicht (6) zu ätzen.
**dadurch gekennzeichnet, dass** die Farbschicht (6) eine opake Lackschicht (10) aufweist.

2. Verfahren nach dem vorhergehenden Anspruch, bei dem das transparente Teil (4) durch Formen eines Kunststoffs, z. B. Polycarbonat, Polypropylen, Polymethylmethacrylat oder cyclisches olefinisches Copolymer, hergestellt wird.

3. Verfahren nach einem der vorhergehenden Ansprüche, bei dem die Laserstrahlung (14) eine Wellenlänge im Infrarotbereich, vorzugsweise im nahen Infrarotbereich, aufweist.

4. Verfahren nach einem der vorhergehenden Ansprüche, bei dem die Firnisschicht (12) aus einem Material hergestellt wird, das ultraviolette Strahlung absorbieren oder reflektieren kann.

5. Verfahren nach einem der vorhergehenden Ansprüche, bei dem nach dem der Schritt des Bestrahlens das Fahrzeugteil (2) poliert wird.

## Claims

1. Method for manufacturing a vehicle part (2), comprising the following steps, in order:
- application of a layer of varnish (12) on one side, designated as second side (4b), of a transparent part (4), the layer of varnish (12) being transparent to any laser radiation with a wavelength in the near infrared range,
- application of a layer of paint (6) on an opposite face to the second face, designated as first side (4a), of the transparent part (4), and
- partial irradiation of the layer of paint (6) with laser radiation (14) so as to engrave the layer of paint (6),
**characterized in that** the layer of paint (6) comprises a layer of opaque lacquer (10).

2. Method according to the preceding claim, wherein the transparent part (4) is manufactured by molding a plastic, for example polycarbonate, polypropylene, poly(methyl methacrylate) or cyclic olefin copolymer.

3. Method according to any of the preceding claims, wherein the laser radiation (14) has a wavelength comprised within infrared, preferably within near infrared.

4. Method according to any of the preceding claims, wherein the layer of varnish (12) is made of a material capable of absorbing or reflecting ultraviolet radiation.

5. Method according to any of the preceding claims, wherein after the irradiation step, the vehicle part is polished (2).
